**Europäisches Patentamt**

**European Patent Office**

**Office européen des brevets**

(19)

(11) Veröffentlichungsnummer : **0 385 150 B1**

# (12) EUROPÄISCHE PATENTSCHRIFT

(45) Veröffentlichungstag der Patentschrift :
**09.12.92 Patentblatt 92/50**

(51) Int. Cl.$^5$ : **E03F 5/10**

(21) Anmeldenummer : **90102449.7**

(22) Anmeldetag : **08.02.90**

(54) Verfahren zur Steuerung von Beckenreinigungs- und Entleerungseinrichtungen.

(30) Priorität : **28.02.89 DE 3906182**

(43) Veröffentlichungstag der Anmeldung :
**05.09.90 Patentblatt 90/36**

(45) Bekanntmachung des Hinweises auf die
Patenterteilung :
**09.12.92 Patentblatt 92/50**

(84) Benannte Vertragsstaaten :
**AT BE CH DE LI LU NL**

(56) Entgegenhaltungen :
**DE-A- 2 739 126**
**DE-A- 3 617 111**
**DE-U- 8 700 079**

(73) Patentinhaber : **KSB Aktiengesellschaft**
**Johann-Klein-Strasse 9**
**W-6710 Frankenthal (DE)**

(72) Erfinder : **Fuchs, Gerhard**
**Bayernstrasse 35a**
**W-8439 Postbauer-Heng (DE)**
Erfinder : **Schmitt, Bernhard**
**Deidesheimer Strasse 15**
**W-6800 Mannheim 31 (DE)**

EP 0 385 150 B1

## Beschreibung

Die Erfindung bezieht sich auf ein Verfahren gemäß dem Oberbegriff des Hauptanspruches.

Die Notwendigkeit der Steuerung von Entleerungseinrichtungen in Regenbecken ergibt sich aus dem Umstand, daß die Entleerungseinrichtung dem Bedarf der Kläranlage und somit den in den flüssigkeitsführenden Zuflußkanälen herrschenden Bedingungen Rechnung tragen muß. Um einen kontinuierlichen Betrieb der Entleerungseinrichtung während der Flüssigkeitsförderung zu gewährleisten, ist es erforderlich, daß die Flüssigkeit eine relativ homogene Konsistenz aufweist. Dadurch wird eine Steuerung der Beckenreinigungseinrichtung notwendig, die vermeidet, daß sich die Entleerungseinrichtung, die am tiefsten Punkt des Regenbeckens installiert ist, durch absinkende Verunreinigungen zusetzt und im Extremfall funktionsunfähig wird.

Die aus der DE-A-27 39 126 und DE-A-36 17 111 bekannten Verfahren beschreiben zwar eine Methode zum Entleeren eines Nebenschluß-Speicherbeckens bzw. zur Reinhaltung von rechteckigen Regenüberlaufbecken, besitzen jedoch den Nachteil, daß ein sinnvolles Zusammenwirken dieser beiden Vorgänge nicht berücksichtigt wird. Nachteilig bei der DE-A-27 39 126 ist weiterhin, daß keine Möglichkeit besteht, steigende Wasserstände im Zuflußkanal zur Steuerung der Entleerungspumpe heranzuziehen, was besonders im Bereich des zur Steuerung benutzten maximalen Wasserstandes im Zuflußkanal zu unerwünschten Schaltvorgängen der Entleerungspumpe führen kann.

Der Erfindung liegt die Aufgabe zugrunde, ein Verfahren nach dem Oberbegriff des Patentanspruches zu schaffen, das eine ausreichende Reinigung eines im Haupt- oder Nebenschluß betriebenen Regenbeckens gewährleistet, wobei dem Gesichtspunkt der Energieersparnis besondere Berücksichtigung zukommen soll.

Diese Aufgabe wird gemäß der Erfindung durch die im kennzeichnenden Teil des Patentanspruches 1 genannten Merkmale gelöst. Durch die verschiedenen, wasserstandsabhängigen Betriebsbereiche der Beckenreinigungseinrichtung wird bei ausreichender Beckenreinigung ein im Vergleich zu anderen Verfahren um bis zu 50% reduzierter Energieeinsatz erreicht. Dadurch, daß im Nebenschlußbetrieb bei ausreichendem Wasserstand im Regenbecken der Betrieb der Entleerungseinrichtung zu einer Ansteuerung der Beckenreinigungseinrichtung führt, wird aufgrund der Homogenisierung des Regenbeckeninhaltes ein Zusetzen der Entleerungseinrichtung vermieden.

Die Ausgestaltung der Erfindung nach den Ansprüchen 2 und 3 bewirkt, daß bei steigendem Wasserstand im Kanal, also bei neuem zur Kläranlage fließenden Wasser, nicht auch noch Wasser aus dem Regenbecken in den Kanal gefördert wird, da sich bei längerem Steigen im Kanal zwangsläufig ein Überlauf in das Regenbecken ereignet. Das Nichtansteuern der Beckenreinigungseinrichtung bei steigender Flüssigkeit im Regenbecken im Hauptschlußbetrieb bewirkt, daß ein Überlauf von verschmutzter Flüssigkeit aus dem Regenbecken in einen Vorfluter bei hohem Wasserstand im Regenbecken durch Aufwirbeln des Wassers vermieden wird.

Die Ansprüche 4 bis 8 beschreiben Ausgestaltungen der Erfindung, die sich auf die unterschiedlichen Schalthöhen und -schwellen beziehen. Diese sind vorteilhaft so angeordnet, daß die Ein- und Ausschaltpunkte bei unterschiedlichen Wasserständen angeordnet sind, wodurch ein unerwünschtes An- und Abfahren der einzelnen Einrichtungen bei Schwankungen des Wasserstandes um einen Punkt herum vermieden wird. Bei Verwendung mehrerer Beckenreinigungseinrichtungen läßt sich durch unterschiedliche Schalthöhen und -schwellen jeder Beckenreinigungseinrichtung die Geometrie des Regenbeckens, insbesondere bei abfallendem Beckenboden, berücksichtigen.

Die vorteilhafte Ausgestaltung der Erfindung aus den Ansprüchen 9 und 10 liegt darin, daß durch die Berücksichtigung der maximalen Schalthäufigkeit jeder einzelnen Beckenreinigungseinrichtung eine Überlastung der Beckenreinigungseinrichtung vermieden wird. Durch die häufiger erfolgende Ansteuerung der Beckenreinigungseinrichtung bei fallendem Wasserstand im Regenbecken wird erreicht, daß sich eventuell abgesetzte Verunreinigungen vom Behälterboden lösen und mit dem Fördermedium vermengen.

Der Vorteil des Anspruches 11 liegt in einer regelmäßig erfolgenden Beckenreinigung, so daß eine erhöhte Verschmutzung gar nicht erst auftreten und zu Schäden führen kann.

Durch die vorteilhafte Ausgestaltung der Erfindung gemäß Anspruch 12 wird vermieden, daß eventuell in der Beckenreinigungseinrichtung gefrorenes Fördermedium zu einer Schädigung der Beckenreinigungseinrichtung führt, wenn diese bei gestiegenem Fördermedium im Regenbecken einen Einschaltbefehl erhält. Die Zeit der Einschaltverzögerung bewirkt ein Tauen des gefrorenen Fördermediums und gewährleistet somit eine einwandfreie Funktion der Beckenreinigungseinrichtung.

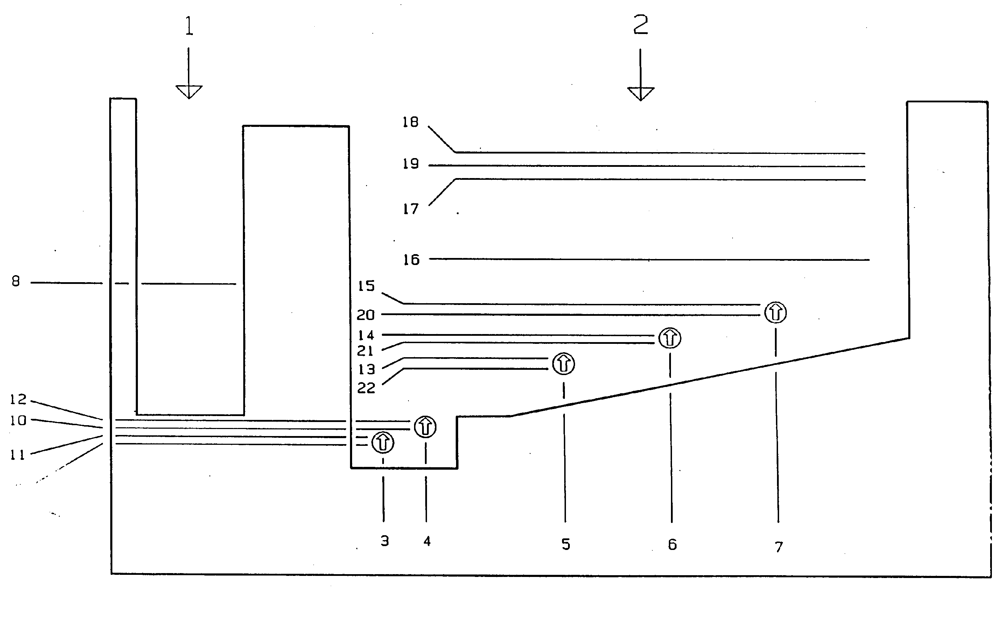

Anhand des in der Figur dargestellten Ausführungsbeispiels wird die Erfindung näher erläutert.

Die Figur zeigt einen Einlaufkanal (1) mit einem im Nebenschluß angeordneten Regenbecken (2), in dem zwei Entleerungs- und drei Beckenreinigungseinrichtungen (3, 4; 5, 6, 7) angeordnet sind. Der maximale Wasserstand im Einlaufkanal (1), der bei der Förderung der Entleerungseinrichtungen (3,4) unterschritten sein muß, ist durch den Pegel (8) angedeutet. Wird Flüssigkeit aus dem Regenbecken (2) in den Einlaufkanal (1) gefördert, so ist jede einzelne Entleerungseinrichtung (3, 4) so lange in Betrieb, bis der Wasserstand im Regenbecken (2) auf eine für sie spezifische Ausschalthöhe (9, 10) abgesunken ist; die Entleerungseinrichtung (3) wird also bei Erreichen der Ausschalthöhe (9) und die Entleerungseinrichtung (4) bei Erreichen der Ausschalthöhe (10) ihren Betrieb einstellen. Sind diese Ausschalthöhen (9, 10) einmal erreicht oder unterschritten, so fördern die Entleerungseinrichtungen (3, 4) bei gestiegenem Wasserstand im Regenbecken (2) erst wieder in den Einlaufkanal (1), wenn der Wasserstand im Regenbecken (2) für die Entleerungseinrichtung (3) die Einschalthöhe (11) und für die Entleerungseinrichtung (4) die Einschalthöhe (12) erreicht hat.

Zum Betrieb der Entleerungseinrichtungen (3, 4) schalten sich die Beckenreinigungseinrichtungen (5, 6, 7) nacheinander im Dauerbetrieb zu, wenn der Wasserstand im Regenbecken (2) auf die ersten Einschaltschwellen (13, 14, 15) angestiegen war. Dieser Dauerbetrieb der Beckenreinigungseinrichtungen (5,6,7) findet bis zur ersten Intervallschalthöhe (16) statt, von der ab die Beckenreinigungseinrichtungen (5, 6, 7) bis zur zweiten Intervallschalthöhe (17) in flüssigkeitsstandsabhängigen Intervallschaltzeiten betrieben werden. Oberhalb der zweiten Intervallschalthöhe (17) bis zu einer in diesem Ausführungsbeispiel für alle Beckenreinigungseinrichtungen (5, 6, 7) gleichen oberen Ausschaltschwelle (18) werden die Beckenreinigungseinrichtungen (5, 6, 7) mit konstanten Intervallschaltzeiten betrieben. Ist die obere Ausschaltschwelle (18) erreicht oder überschritten worden, so findet kein Betrieb der Beckenreinigungseinrichtungen (5, 6, 7) statt. Sinkt der Wasserstand im Regenbecken (2), so werden die Beckenreinigungseinrichtungen (5, 6, 7) bei Erreichen der zweiten Einschaltschwelle (19) in Betrieb genommen und schalten bei weiterem Sinken des Flüssigkeitsstandes im Regenbecken (2) nacheinander ab, wenn die verschiedenen unteren ausschaltschwellen (20, 21, 22) vom Flüssigkeitsstand erreicht werden.

**Patentansprüche**

1. Verfahren zur Steuerung mindestens einer nach dem Injektionsprinzip arbeitenden Beckenreinigungseinrichtung (5,6,7) sowie, bei im Nebenschluß betriebenen Flüssigkeitssammelbecken, mindestens einer die Entleerung des Flüssigkeitssammelbeckens bewirkenden Entleerungseinrichtung (3,4), insbesondere für Einrichtungen von im Haupt- oder Nebenschluß betriebenen Regenbecken (2), wobei im Nebenschlußbetrieb die Entleerungseinrichtung Flüssigkeit aus dem Regenbecken in einen Kanal (1) fördert, wenn der Flüssigkeitsstand im Kanal (1) einen oberen Grenzwert unterschritten und im Regenbecken (2) einen unteren Grenzwert erreicht oder überschritten hat, **dadurch gekennzeichnet,** daß im Nebenschlußbetrieb bei der Ansteuerung einer oder mehrerer Entleerungseinrichtungen (3, 4) eine oder mehrere Beckenreinigungseinrichtungen (5, 6, 7) wie im Hauptschlußbetrieb in Abhängigkeit vom Flüssigkeitsstand im Regenbecken (2) in der Weise betrieben werden, daß auf einen Dauerbetriebsbereich (13 bis 16) ein Bereich variabler Intervallzeiten (16 bis 17) folgt, an den sich ein Bereich konstanter Intervallzeiten (17 bis 18) anschließt.

2. Verfahren nach Anspruch 1, dadurch gekennzeichnet, daß im Nebenschlußbetrieb die Entleerungseinrichtungen (3, 4) nur dann angesteuert werden, wenn die Flüssigkeit im Kanal (1) nicht steigt.

3. Verfahren nach Anspruch 1, dadurch gekennzeichnet, daß im Hauptschlußbetrieb die Beckenreinigungseinrichtungen nur dann angesteuert werden, wenn die Flüssigkeit im Regenbecken nicht steigt.

4. Verfahren nach den Ansprüchen 1 und 2, dadurch gekennzeichnet, daß im Nebenschlußbetrieb jede einzelne Entleerungseinrichtung (3, 4) abschaltet, wenn der Flüssigkeitsstand im Regenbecken (2) auf eine für sie spezifische Ausschalthöhe (9, 10), die unterhalb ihrer spezifischen Einschalthöhe (11, 12) liegt, abgesunken ist.

5. Verfahren nach einem oder mehrerer der Ansprüche 1 bis 4, dadurch gekennzeichnet, daß bei jeder einzelnen Beckenreinigungseinrichtung (5, 6, 7) zwischen einer unteren Ausschaltschwelle (22, 21, 20) und einer ersten Intervallschalthöhe (16) eine erste Einschaltschwelle (13, 14, 15) und zwischen einer zweiten Intervallschalthöhe (17) und einer oberen Ausschaltschwelle (18) eine zweite Einschaltschwelle (19) liegt.

6. Verfahren nach einem oder mehrerer der Ansprüche 1 bis 5 dadurch gekennzeichnet, daß jede einzelne Beckenreinigungseinrichtung (5, 6, 7) bei Erreichen der ersten Einschaltschwelle (13, 14, 15) im Dauerbetrieb arbeitet, wenn vorher die untere Ausschaltschwelle (22, 21, 20) erreicht oder unterschritten war und daß bei Erreichen der zweiten Einschaltschwelle (19) Intervallbetrieb mit konstanten Intervallzeiten stattfindet, wenn die obere Ausschaltschwelle (18) erreicht oder überschritten war.

7. Verfahren nach einem oder mehrerer der Ansprüche 1 bis 6, dadurch gekennzeichnet, daß jede einzelne Beckenreinigungseinrichtung (5, 6, 7) zwischen der ersten und zweiten Intervallschalthöhe (16, 17) im Intervallbetrieb mit variablen Intervallzeiten arbeitet, bei Nichterreichen der unteren Ausschaltschwelle (22, 21, 20) zwischen dieser und der ersten Intervallschalthöhe (16) im Dauerbetrieb und bei Nichterreichen der oberen Ausschaltschwelle (18) zwischen dieser und der zweiten Intervallschalthöhe (17) im Intervallbetrieb mit konstanten Intervallzeiten arbeitet.

8. Verfahren nach einem oder mehrerer der Ansprüche 1 bis 7, dadurch gekennzeichnet, daß bei Betrieb mehrerer Beckenreinigungseinrichtungen (5, 6, 7) die verschiedenen Schalthöhen (16, 17) und -schwellen (13, 14, 15, 18, 19, 20, 21, 22) unterschiedlich sind.

9. Verfahren nach einem oder mehrerer der Ansprüche 1 bis 8, dadurch gekennzeichnet, daß im Bereich des Intervallbetriebes mit variablen Intervallzeiten (16 bis 17) jede einzelne Beckenreinigungseinrichtung (5, 6, 7) in Zeitintervallen betrieben wird, die abhängig vom Flüssigkeitsstand im Regenbecken (2) und der maximal zugelassenen Schalthäufigkeit jeder einzelnen Beckenreinigungseinrichtung (5, 6, 7) sind.

10. Verfahren nach einem oder mehrerer der Ansprüche 1 bis 9, dadurch gekennzeichnet, daß im Bereich des Intervallbetriebes mit variablen Intervallzeiten (16 bis 17) die Ansteuerung jeder einzelnen Beckenreinigungseinrichtung (5, 6, 7) um so häufiger erfolgt, je geringer der Flüssigkeitsstand im Regenbecken (2) ist.

11. Verfahren nach einem oder mehrerer der Ansprüche 1 bis 10, dadurch gekennzeichnet, daß bei einer über einen festgelegten Zeitraum andauernden Stillstandszeit der Entleerungseinrichtungen (3, 4) im Nebenschlußbetrieb oder der Beckenreinigungseinrichtungen im Hauptschlußbetrieb und einem über der unteren Abschaltschwelle (22, 21, 20) der Beckenreinigungseinrichtungen (5, 6, 7) liegenden Flüssigkeitsstand im Regenbecken (2) eine oder mehrerer Beckenreinigungseinrichtungen (5, 6, 7) über einen festgesetzten Zeitraum im Dauerbetrieb arbeiten.

12. Verfahren nach einem oder mehrerer der Ansprüche 1 bis 11, dadurch gekennzeichnet, daß im Hauptschlußbetrieb bei erfolgtem Einschaltbefehl die Inbetriebnahme der Beckenreinigungseinrichtung um eine festgesetzte Zeitdauer verzögert wird, wenn die Außentemperatur einen vorgegebenen Wert erreicht oder unterschritten hat.

## Claims

1. A method of controlling at least one reservoir cleaning device (5, 6 and 7) operating on the injection principle and, in the case of liquid collecting reservoirs run in parallel, of at least one emptying device (3 and 4) responsible for the emptying of the liquid collecting reservoir, more particularly for devices of rain water collecting reservoirs (2) run in series or in parallel, the emptying device pumping liquid out of the rain water reservoir into a channel (1) in parallel operation, when the liquid level in the channel (1) has gone below an upper limit value and in the rain water reservoir (2) has reached or exceeded a lower limit value, characterized in that in parallel operation for the switching of one or more emptying devices (3 and 4) one or more reservoir cleaning devices (5, 6 and 7) are run as in series operation in a way dependent on the liquid level in the rain water reservoir (2) in such a manner that a continuous operation range (13 through 16) is followed by a range of constant interval times (17 through 18).

2. The method as claimed in claim 1, characterized in that during shunt operation the emptying devices (3 and 4) are only put into operation when the liquid in the channel (1) is not on the rise.

3. The method as claimed in claim 1, characterized in that during series operation the reservoir cleaning devices are only switched when the liquid in the rain water reservoir is not on the rise.

4. The method as claimed in claim 1 and claim 2, characterized in that during shunt operation each individual emptying device (3 and 4) is switched off when the liquid level in the rain water reservoir (2) has gone down to switching off level (9 and 10) which is specific for it and which is below its specific switching on level (11 and 12).

5. The method as claimed in one or more of the claims 1 through 4, characterized in that in the case of each individual reservoir cleaning device (5, 6 and 7) a first switching on threshold (13, 14 and 15) is set between a lower switching threshold (22, 21 and 22) and a first intermittent switching level (16) and a second switching threshold (19) is set between a second intermittent switching level (17) and an upper switching off level (18).

6. The method as claimed in one or more of the claims 1 through 5, characterized in that each individual reservoir cleaning device (5, 6 and 7) operates continuously on attaining the first switching on threshold (13, 14 and 15), if prior to this the lower switching off threshold (22, 21 and 20) has been reached or gone below and in that on attaining the second switching threshold (19) intermittent operation is performed with constant interval times, if the upper switching threshold (18) has been reached or exceeded.

7. The method as claimed in one or more of the claims 1 through 6, characterized in that each individual reservoir cleaning device (5, 6 and 7) operates between the first and the second intermittent switching level (16 and 17) in intermittent operation with adjustable intervals, on failing to reach the lower switching off level (22, 21 and 20) operates between the same and the first intermittent switching level (16) continuously and on failing to reach the upper switching off level (17) operates intermittently with constant interval times.

8. The method as claimed in one or more of the claims 1 through 7, characterized in that in the case of operation with a plurality of reservoir cleaning devices (5, 6 and 7) the different switching levels (16 and 17) and thresholds (13, 14, 15, 18, 19, 20, 21 and 22) are different.

9. The method as claimed in one or more of the claims 1 through 8, characterized in that in the case of intermittent operation with adjustable interval times (16 through 17) each individual reservoir cleaning device (5, 6 and 7) is run in time intervals, which are dependent on the liquid level in the rain water reservoir (2) and the maximum permissible switching frequency of each individual reservoir cleaning device (5, 6 and 7).

10. The method as claimed in one or more of the claims 1 through 9, characterized in that in the case of intermittent operation with adjustable interval times (16 through 17) the lower the liquid level (2) in the reservoir (2), the less frequent the switching on of each individual reservoir cleaning device (5, 6 and 7).

11. The method as claimed in one or more of the claims 1 through 10, characterized in that in the case of an idle time, exceeding a set period of time, of the emptying devices (3 and 4) in shunt operation or of the reservoir cleaning devices in series operation and a liquid level in the rain water reservoir (2) above the lower switching of threshold (22, 21 and 20) of the reservoir cleaning devices (5, 6 and 7) one or more reservoir cleaning devices (5. 6 and 7) are run continuously for a predetermined time.

12. The method as claimed in one or more of the claims 1 through 11, characterized in that in the case of series and of operation after the giving of a switching command the putting into operation of the reservoir cleaning is delayed for a predetermined time, if the outdoor temperature has reached or has gone below a predetermined value.

**Revendications**

1. Procédé pour la commande d'au moins un dispositif de nettoyage d'un bassin (5, 6, 7) fonctionnant selon le principe d'injection ainsi que, dans le cas de bassins de recueillement de liquides en service en dérivation d'au moins un dispositif de vidange (3, 4) réalisant l'évacuation du bassin de recueillement des liquides, en particulier pour des dispositifs de bassins de recueillement des eaux de pluie (2) en service en série ou en dérivation, dans lequel, en service en dérivation, le dispositif de vidange pompe le liquide hors du bassin de recueillement des eaux de pluie dans un canal (1) lorsque le niveau du liquide dans le canal (1) est inférieur à une valeur limite supérieure et le pompe dans le bassin de recueillement des eaux de pluie (2) lorsqu'une valeur limite inférieure a été atteinte ou dépassée, caractérisé en ce que, en service en dérivation, par la commande d'un ou de plusieurs dispositifs de vidange (3, 4) un ou plusieurs dispositifs de vidange du bassin (5, 6, 7) sont activés comme en service en série selon le niveau de liquide dans le bassin de recueillement des eaux de pluie (2) de telle manière qu'après une gamme de service continu (13 à 16) une gamme de temps variables d'intervalle (16 à 17) suit à laquelle fait suite une gamme de temps constants d'intervalle (17 à 18).

2. Procédé selon la revendication 1 caractérisé en ce que, en service en dérivation, les dispositifs de vidange (3, 4) ne sont actionnés qu'à partir du moment où le liquide ne monte pas dans le canal (1).

3. Procédé selon la revendication 1 caractérisé en ce que, en service en série, les dispositifs de nettoyage du bassin ne sont actionnés qu'à partir du moment où le liquide ne monte pas dans le bassin de recueillement des eaux de pluie.

4. Procédé selon les revendications 1 et 2 caractérisé en ce que, en service en dérivation, chaque dispositif de vidange (3, 4) s'arrête lorsque le niveau du liquide dans le bassin de recueillement des eaux de pluie (2) a baissé pour atteindre un niveau spécifique d'arrêt (9, 10) qui est inférieur à son niveau spécifique d'enclenchement (11, 12).

5. Procédé selon une ou plusieurs des revendications 1 à 4 caractérisé en ce que, dans chaque dispositif de nettoyage du bassin (5, 6, 7) est situé un premier seuil de déclenchement (13, 14, 15) entre un seuil inférieur d'arrêt (22, 21, 20) et un premier niveau de marche d'intervalle (16) et que, entre un second niveau de marche d'intervalle (17) et un seuil supérieur d'arrêt (18), est situé un second seuil de déclenchement (19).

6. Procédé selon une ou plusieurs revendications 1 à 5 caractérisé en ce que chaque dispositif de nettoyage du bassin (5, 6, 7) fonctionne en service continu quand le premier seuil de déclenchement (13, 14, 15) est atteint, si, auparavant, le seuil d'arrêt inférieur (22, 21, 20) a été atteint ou si le niveau du liquide est descendu au-dessous et en ce que, lorsque le second seuil de déclenchement (19) est atteint, le service d'intervalle avec des temps constants d'intervalle fonctionne lorsque le seuil supérieur d'arrêt (18) a été atteint ou dépassé.

7. Procédé selon une ou plusieurs revendications 1 à 6 caractérisé en ce que chaque dispositif de nettoyage du bassin (5, 6, 7) fonctionne, en service par intervalle, entre le premier et le second niveau de déclenchement d'intervalle (16, 17) avec des temps variables d'intervalle, qu'il fonctionne en service continu lorsque le seuil inférieur d'arrêt (22, 21, 20) n'est pas atteint entre celui-ci et le premier niveau de déclenchement de l'intervalle (16) et qu'il fonctionne en service d'intervalle avec des temps constants d'intervalle lorsque le seuil supérieur d'arrêt (18) n'est pas atteint entre celui-ci et le second niveau d'enclenchement d'intervalle (17).

8. Procédé selon une ou plusieurs des revendications 1 à 7 caractérisé en ce que, lorsque plusieurs dispositifs de nettoyage du bassin (5, 6, 7) fonctionnent les divers niveaux (16, 17) et seuils (13, 14, 15, 18, 19, 20, 21, 22) d'enclenchement sont différents.

9. Procédé selon une ou plusieurs des revendications 1 à 8 caractérisé en ce que, dans la gamme du service d'intervalle, chaque dispositif de nettoyage du bassin (5, 6, 7) est actionné par intervalles de temps avec des temps variables d'intervalle (16 à 17), ces derniers dépendant du niveau du liquide dans le bassin de recueillement des eaux de pluie (2) et de la fréquence de déclenchement maximum autorisée de chaque dispositif de nettoyage du bassin (5, 6, 7).

10. Procédé selon une ou plusieurs des revendications 1 à 9 caractérisé en ce que dans la gamme du service d'intervalle avec des temps variables d'intervalle (16 à 17) la fréquence de commande de chaque dispositif de nettoyage du bassin (5, 6, 7) est d'autant plus grande que le niveau du liquide dans le bassin de recueillement des eaux de pluie (2) est faible.

11. Procédé selon une ou plusieurs des revendications 1 à 10 caractérisé en ce qu'un ou plusieurs dispositifs de nettoyage du bassin (5, 6, 7) fonctionnent en service continu pendant un temps fixe si les dispositifs de vidange (3, 4) en service en dérivation ou les dispositifs de nettoyage du bassin en service en série sont en arrêt prolongé passé un certain temps fixé ou si le niveau de liquide dans le bassin de recueillement des eaux de pluie (2) dépasse le seuil inférieur d'arrêt (22, 21, 20) des dispositifs de nettoyage du bassin (5, 6, 7).

12. Procédé selon une ou plusieurs des revendications 1 à 11 caractérisé en ce que, en service en série, lorsque l'ordre d'enclenchement a été donné, la mise en service du dispositif de nettoyage du bassin est retardée d'un temps fixé si la température extérieure est égale ou inférieure à une valeur donnée.

EP 0 385 150 B1